# EUROPEAN PATENT APPLICATION

(11) **EP 4 686 650 A1**
(43) Date of publication of application: **04.02.2026**
(21) Application number: 25189420.0
(22) Date of filing: 14.07.2025
(51) Int. Cl.: B64C 3/56

(54) **LATCH**

(30) Priority: 31.07.2024 GB 202411249
(71) Applicant: Airbus Operations Limited, Bristol BS34 7PA (GB)
(72) Inventor: TARACZKY, Daniel, Bristol (HU); MARTIN, Julien, Bristol (FR); MORRELL, Paul, Bristol (GB); RUSSELL, Cameron James, Gloucester (GB)
(74) Representative: Abel & Imray LLP

(57) **Abstract**

The invention relates to a latch for locking an aircraft folding wing. The latch comprises a lug (102a) comprising an aperture (204), and a latch pin (202) moveable within the aperture (204). The latch further includes a seal (210) configured to inhibit fluid transfer between the aperture (204) and the latch pin (202) as the latch pin (202) moves within the aperture (204).

## Description

### BACKGROUND OF THE INVENTION

The present disclosure relates to a latch.

The present disclosure also concerns a latch for locking an aircraft folding wing, and an aircraft wing.

Civil aircraft design has evolved to address the increasing demand for larger and more efficient aircraft, which often necessitate larger wingspans. Folding wing tips have emerged as a compromise between large wingspans and airport gate compatibility. By allowing the outer wing tips to fold relative to the fixed wings, the effective wingspan can be reduced to comply with gate and storage dimensions. Known folding wings may have a latch line, commonly referred to as a latch, to ensure the wing tips are locked firmly in place during flight, and to safely and efficiently release the wing tips for folding when the aircraft is on the ground.

Such a latch often includes a latch pin moveable relative to one or more apertures in the fixed wing and/or wing tip. In use, aircraft components may be prone to moisture accumulation, given the variations in temperature, humidity and pressure, and rain experienced during flight and ground operations. Moisture accumulation may cause several potential problems. Cold temperatures may cause the moisture to freeze, thereby leading to ice formation on the latch pin. Ice may degrade the performance of the latch by inhibiting movement of the latch pin within the one or more apertures. Furthermore, accumulated moisture may attract dirt and debris, thereby also degrading performance of the latch. Furthermore, rather than addressing the problem of moisture penetration, hydraulically powered latch lines have sufficient force to remove ice from the latch line via actuation. Electrically powered latch lines have some advantages over hydraulics, such as reduced size and complexity, and lower maintenance requirements. However, electrical actuators can be less powerful than their hydraulic counterparts, and therefore may be less suitable for expelling ice and/or debris from the latch line via actuation of the latch pin.

The present invention seeks to mitigate one or more of the above-mentioned problems. Alternatively or additionally, the present invention seeks to provide an improved latch.

### SUMMARY OF THE INVENTION

The present invention provides, according to a first aspect, a latch. The latch may be suitable for locking an aircraft folding wing. The latch may comprise an aperture; a latch pin moveable within the aperture; and a seal configured to inhibit fluid transfer between the aperture and the latch pin as the latch pin moves within the aperture. The latch may comprise a lug comprising the aperture.

In this way, the seal may inhibit fluid on the latch pin from entering the aperture. Alternatively or additionally, the seal may inhibit fluid moving from the aperture to the latch pin. Thus, movement of the latch pin within the aperture may enable the seal to mechanically expel fluid from the latch pin, and/or the seal may aid in retaining fluid within the aperture. For example, undesirable atmospheric moisture may be expelled from the latch pin and/or desirable lubricant may be retained within the aperture. This may provide a latch that: is less prone to degradation and/or mechanical fatigue; requires less frequent maintenance; and/or is suitable for use with an electrically powered actuator. The latch may be operable without exceeding an operational limit load, which may reduce a load required to operate the latch.

The aperture may be located within at least one of an aircraft fixed wing and an aircraft wing tip. There may be a plurality of apertures, for example at least two apertures, optionally at least three apertures, optionally at least five apertures. The aperture may be a generally cylindrical cavity in at least one of an aircraft fixed wing and an aircraft wing tip. The aperture may penetrate partway or entirely through an aircraft component, for example a component lug. The latch pin may be a generally cylindrical component. The latch pin may be moveable partway within the aperture, or entirely through the aperture. The latch may have: an unlocked configuration in which the latch pin is not within the aperture; and a locked configuration in which the latch pin is at least partly within the aperture, for example penetrating wholly through the aperture. The latch pin may be configured to translate in a linear motion relative to the aperture. A linear motion of the latch pin may be orthogonal to a direction coincident with the diameter of the aperture. The aperture may comprise the seal. Alternatively or additionally, the latch pin may comprise the seal. Thus, both the latch pin and the aperture may each comprise a seal. As the latch pin moves within the aperture, the seal may be configured to scrape or wipe at least one of the latch pin and the aperture.

It may be that the seal comprises a resilient portion. In this way, the resilient portion may enable the seal to maintain contact with the latch throughout part or whole of the range of motion of the latch pin within the aperture. The resilient portion may enable the seal as a whole to float relative to the latch pin and/or the aperture as the latch pin moves within the aperture. The resilient portion may be configured to resiliently deform, to allow tolerance for any misalignment between the latch pin and the aperture and/or off-axis movement of the latch pin relative to the aperture. The resilient portion comprise a resilient material, for example an elastic material such as rubber or an elastomer. Alternatively or additionally, the resilient portion may comprise a structure that enables resilient deformation, such as a plurality of holes or cavities. Optionally, the resilient portion may have dimensions, for example narrower portions, which confer more resilience than thicker portions.

It may be that the seal comprises a contact portion configured to wipe the latch as the latch pin moves within the aperture. The contact portion may comprise a stiff material, for example a material having less resilience than the resilient portion. Alternatively or additionally, the contact portion may comprise a structure that resists resilient deformation. Optionally, the contact portion may have dimensions which confer rigidity. The contact portion may be configured to be sufficiently rigid to prevent fluid and/or debris transfer between the latch pin and the aperture as the latch pin moves within the aperture.

It may be that the seal comprises a retaining portion for retaining the seal in place. The retaining portion may comprise a resilient material and/or a relatively stiff material. The retaining portion may be configured for mounting to the latch pin and/or the aperture. The retaining portion may be configured to resiliently deform when mounted to the latch pin and/or the aperture. Such deformation may induce maintained internal elastic forces within the retaining portion, said elastic forces acting to retain the retaining portion in place. The retaining portion may be removeable and/or replaceable, to facilitate maintenance or replacement of the seal. The retaining portion may comprise a retaining ring placed within a mounting ring.

The resilient portion and the contact portion may comprise the same materials. Alternatively, the resilient portion may comprise a material different from a material of the contact portion. Similarly, the resilient portion and the retaining portion may comprise the same materials. Alternatively, the resilient portion may comprise a material different from a material of the retaining portion. The contact portion and the retaining portion may comprise the same materials. Alternatively, the contact portion may comprise a material different from a material of the retaining portion. The resilient portion, the contact portion and the retaining portion may be distinct portions that are attached or bonded together. Alternatively, the resilient portion, the contact portion and the retaining portion may be integrally formed with one another.

The resilient portion may be between the contact portion and the retaining portion. In this way, the contact portion may wipe the latch, while the resilient portion may enable the seal to deform as the latch pin moves within the aperture, thereby maintaining contact between the contact portion and the latch. The retaining portion may be adjacent to the latch pin and/or the aperture.

It may be that aperture is within a bush. The bush may be a plain bearing. The bush may be configured to prevent or reduce wear caused by the latch pin moving. The bush may comprise metal, for example metal alloy, optionally steel, optionally copper nickel bronze alloy. Alternatively or additionally, the bush may comprise a composite material, for example wound glass fibre. The bush may be configured to have an interference fit within an aircraft component. Alternatively or additionally, the bush may comprise a lock ring for securing the bush within an aircraft component. The bush may be a generally cylindrical component having a central aperture, the bush suitable for insertion within an aircraft component.

It may be that the seal comprises a latch pin seal, the latch pin seal attached to the latch pin and configured to contact the aperture as the latch pin moves within the aperture. The seal may be located exclusively on the latch pin, and not on the aperture.

It may be that latch pin seal is adjacent to an outer circumference of the latch pin. For example, the latch pin seal may be arranged concentrically around an end of the latch pin. In this way, the latch pin seal may be accessible for maintenance and/or replacement.

It may be that an outer edge of the latch pin seal is curved. In this way, the shape of the latch pin seal may facilitate movement of the latch pin within the aperture. Alternatively or additionally, the shape of the latch pin seal may facilitate the retention of fluid, for example lubricant, within the aperture. It may be that an outer edge of the latch pin seal is tapered.

It may be that the seal comprises an aperture seal, the aperture seal attached to the aperture and configured to contact the latch pin as the latch pin moves within the aperture. The seal may be located exclusively on the aperture, and not on the latch pin. Alternatively, the latch may comprise a latch pin seal and an aperture seal, such that a separate seal is located both on the latch pin and on the aperture. The latch pin seal and aperture seal may comprise complementary geometries that facilitate fluid retention and/or removal.

It may be that the aperture seal is adjacent to an inner circumference of the aperture. For example, the aperture seal may be arranged concentrically within the aperture. In this way, the aperture seal may be accessible for maintenance and/or replacement. Additionally or alternatively, placement of the aperture seal within the aperture may facilitate retaining fluid, for example lubricant, within a bore of the aperture.

It may be that an outer edge of the aperture seal is tapered. For example, the aperture seal may be narrowest at an end of the aperture seal distal from the aperture. In this way, the aperture seal may have a shape that facilitates scraping or wiping of the latch pin as the latch pin moves within the aperture. Alternatively or additionally, an outer edge of the aperture seal may be curved. In this way, the aperture seal may have a shape that facilitates retention of fluid, for example lubricant, within the aperture.

It may be that a height of the or each seal is between 0.1 mm and 2 mm. Optionally, the height may be defined as the radial extent of the seal. In this way, the dimensions of the seal may be configured to correspond with the tolerance of relative movement between the latch pin and the aperture.

It may be that the latch further comprises an actuator for moving the latch pin, the actuator being electrically powered. The present disclosure recognises that electrically powered actuators may be more efficient than hydraulically powered actuators, and may have reduced size, complexity, and maintenance requirements. An electrically powered actuator may generate insufficient force to adequately remove ice, fluid and/or debris from the latch pin as the latch pin moves within the aperture. Surprisingly, it has been found that a latch according to the present disclosure may enable the use of an electrically powered actuator while providing sufficient maintenance of the latch. Alternatively, the actuator may be hydraulically powered.

According to a second aspect of the invention there is provided an aircraft wing comprising a fixed wing and a wing tip mounted at an end of the fixed wing, the wing tip rotatable relative to the fixed wing about a hinge axis, wherein the aircraft wing further comprises: a latch according to the first aspect, the aperture located within the fixed wing or the wing tip, adjacent to the hinge axis.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention.

### DESCRIPTION OF THE DRAWINGS

Embodiments of the present invention will now be described by way of example only with reference to the accompanying schematic drawings of which:
- Figures 1a and 1b: show a side cross-sectional view of a known latch;
- Figure 2: shows a side cross-sectional view of a latch, according to an embodiment of the invention;
- Figure 3: shows a side cross-sectional view of a seal, according to an embodiment of the invention; and
- Figure 4: shows a front view of an aircraft wing, according to an embodiment of the invention.

### DETAILED DESCRIPTION

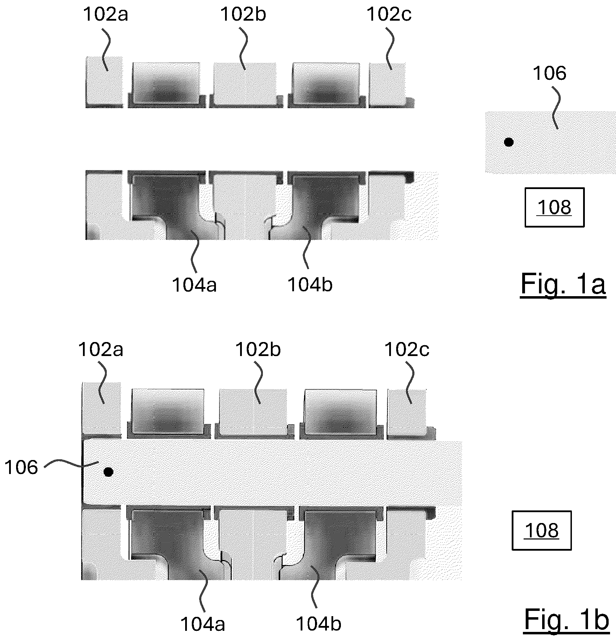

Figures 1a and 1b are cross-sectional views of a latch line of an aircraft folding wing. The latch line includes three first component lugs 102a, 102b, 102c, each comprising an aperture. The first component may be a fixed wing. The latch line also includes two second component lugs 104a, 104b, each comprising an aperture. The second component may be a folding wing tip, configured to fold relative to the fixed wing. Figure 1a shows a latch pin 106 on the right-hand side of the lugs, wherein the latch pin 106 is not within any of the apertures, such that the first component is free to rotate relative to the second component. Figure 1b shows the latch pin 106 passing through the apertures in each of the component lugs 102a, 102b, 102c, 104a, 104b to lock the first component relative to the second component. An actuator 108 is shown diagrammatically within a box. It will be understood that the actuator 108 is configured to move the latch pin 106 in a translational movement between the positions shown in Figures 1a and 1b, to unlock and lock the components relative to one another. It may be that the actuator is electrically powered.

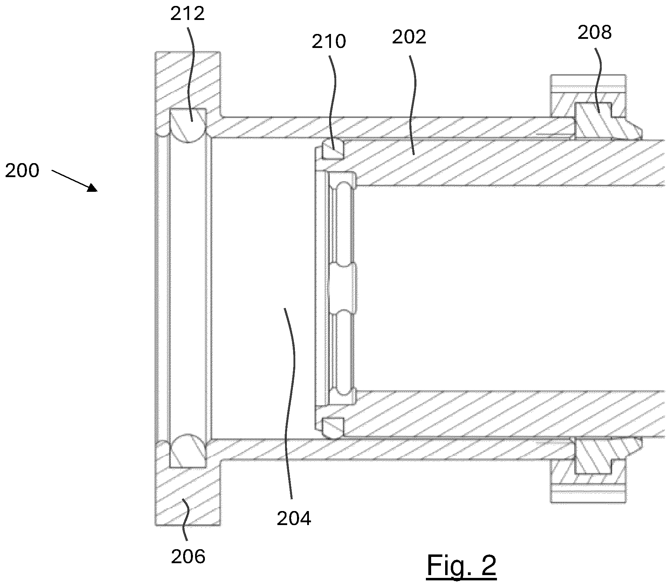

Figure 2 shows a side cross-sectional view of a latch 200 according to an embodiment of the invention. The latch 200 comprises a latch pin 202, which is a generally cylindrical component having a generally rectangular cross-section. The latch pin 202 is shown partially inserted within an aperture 204. While only one aperture 204 is shown, it will be appreciated that a latch 200 may comprise several apertures 204, which may each have an identical, similar or different configuration to the aperture 204 shown. The aperture 204 is formed by a bush 206. The bush 206 is locatable within an aircraft component (not shown), such as a lug of a fixed wing or a wing tip. It will be appreciated that the aperture 204 may also be located directly within an aircraft component, without such a bush 206. The latch pin 202 enters the aperture 204 on the right-hand side of the drawing, which will be referred to as the proximal end of the aperture 204, given that it is the end closest to the point of entry of the latch pin 202 within the aperture 204. The aperture 204 comprises an aperture seal 208 at the proximal end. The aperture seal 208 is mounted partially within the aperture 204, and is concentric with the aperture 204, being arranged around an internal perimeter of the aperture 204. A portion of the aperture seal 208 extends radially inwards from the bush 206, said portion extending across a gap between the inner edge of the aperture 204 and the outer edge of the latch pin 202. A portion of the aperture seal 208 extends out beyond the confines of the bush 206, said portion comprising a tapered profile that narrows as it extends away from the bush 206. The tapered profile of the outward face of the aperture seal 208 is configured to wipe excess moisture and/or debris from the latch pin 202 as it moves within the aperture 204. The shape and/or configuration of the aperture seal 208 is also configured to retain fluid, such as lubricant, within the aperture 204 as the latch pin 202 moves from within the aperture 204 to outside of the aperture 204.

The right-hand side of the latch pin 202 is not shown in the drawing, given that the latch pin 202 extends rightward out of the confines of the drawing. The left-hand side of the latch pin 202 is shown partially inserted within the aperture 204 and therefore within the bush 206. It will be appreciated that in the locked configuration, the latch pin 202 may extend all the way through the aperture 204 and out of the left-hand side of the bush 206. Alternatively, in the locked configuration, movement of the latch pin 202 may terminate partway through the aperture 204 and the bush 206, especially in the case when the aperture 204 and bush 206 in question are at a terminal end of the latch 200 as a whole.

The left-hand side of the latch pin 202 will be referred to as the proximal end of the latch pin 202, given that it is the end that first enters the aperture 204 when the latch 200 is locked. The proximal end of the latch pin 202 comprises a latch pin seal 210. The latch pin seal 210 is mounted adjacent to the proximal end of the latch pin 202, and is set back from the proximal end of the latch pin 202. A portion of the latch pin seal 210 extends radially outwards from the latch pin 202, said portion extending across a gap between the outer edge of the latch pin 202 and the inner edge of the aperture 204.

A portion of the latch pin seal 210 comprises a curved profile. The curved profile of the latch pin seal 210 is configured to facilitate the inhibition of fluid transfer between the aperture 204 and the latch pin 202 as the latch pin 202 moves within the aperture 204. For example, the latch pin seal 210 may be configured to assist with fluid retention, for example the retention of lubricant, within the aperture. The latch pin seal 210 may also be configured to work in conjunction with the aperture seal 208. For example, the curved profile of the latch pin seal 210 may move smoothly past the tapered profile of the aperture seal 208 as the latch pin 202 moves within the aperture 204, thereby facilitating operation of the latch 200 and aiding the wiping motion of the aperture seal 208.

The left-hand side of the aperture 204 will be referred to as the distal end of the aperture 204, given that it is the end that is furthest from the point of entry of the latch pin 202 within the aperture 204. The distal end of the aperture 204 comprises a distal aperture seal 212. The distal aperture seal 212 has a curved profile. Given that in the embodiment shown, the aperture seal 208 is the first to contact the latch pin 202 as it moves within the aperture 204, the distal aperture seal 212 is configured to contact the latch pin 202 if and when it moves entirely through the aperture 204 and out of the left-hand side. The distal aperture seal 212 has a curved profile, to facilitate with fluid retention within the aperture 204, and/or wiping of the latch pin 202 as it moves back out of the aperture 204. A portion of the distal aperture seal 212 extends radially inwards from the bush 206, said portion extending across a gap between the inner edge of the aperture 204 and the outer edge of the latch pin 202.

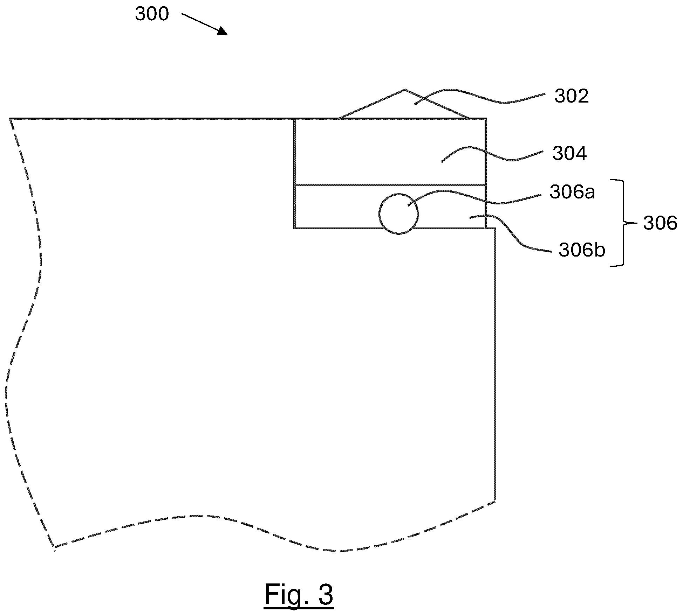

Figure 3 shows a side cross-sectional view of a seal 300. It will be appreciated that the seal 300 may be an aperture seal or a latch pin seal, and is described with reference to Figure 3 primarily with regards to the configuration of the seal 300, rather than its specific location within a latch. The seal 300 comprises three portions: a contact portion 302; a resilient portion 304; and a retaining portion 306. The contact portion 302 has a generally triangular cross-section, but may equally be curved and/or tapered as in the previous drawing. The contact portion 302 may extend partway or the whole of the way around an aperture or a latch pin, and may therefore have an annular shape. The contact portion 302 extends away from the body of the aperture or latch pin to which the seal is attached. The height of the contact portion 302 is between 0.1 mm and 2 mm, for example between 0.25 mm and 0.65 mm. The height of the contact portion 302 may be selected based on the tolerance of movement and/or dimensions between the aperture and the latch pin, such that the contact portion 302 bridges a gap between the aperture and the latch pin as the latch pin moves within the aperture. The contact portion 302 comprises a relatively stiff material, and has a geometry suitable for wiping the latch pin or the aperture.

The resilient portion 304 is located between the contact portion 302 and the retaining portion 306. The resilient portion 304 has a generally rectangular cross-section. The resilient portion 304 may extend partway or the whole of the way around an aperture or a latch pin, and may therefore have an annular shape. The resilient portion 304 comprises a relatively compliant material, which may resiliently deform as a latch pin moves within an aperture. In this way, the deformation of the resilient portion 304 facilitates the maintenance of contact between the contact portion 302 and the latch pin or the aperture. The resilience of the resilient portion 304 may also minimise the mechanical resistance of the seal during actuation of the latch, thereby optimising the efficiency of operation of the latch.

The retaining portion 306 is located closest to the body of the aperture or latch pin to which the seal 300 is attached. The retaining portion 306 comprises a retaining ring 306a and a mounting ring 306b. The retaining ring 306a has a circular cross-section, and may extend partway or the whole of the way around an aperture or latch pin, and may therefore have an annular shape. The retaining ring 306a is placed within the mounting ring 306b. The mounting ring 306b has a generally rectangular cross-section, with a circular cross-section cavity configured to accept the retaining ring 306a. During mounting of the seal 300, the retaining ring 306a and/or the mounting ring 306b may require a degree of deformation to be mounted to a latch pin or an aperture. In this way, internal elastic forces present within the retaining ring 306a and/or the mounting ring 306b may facilitate retaining the seal 300 in place.

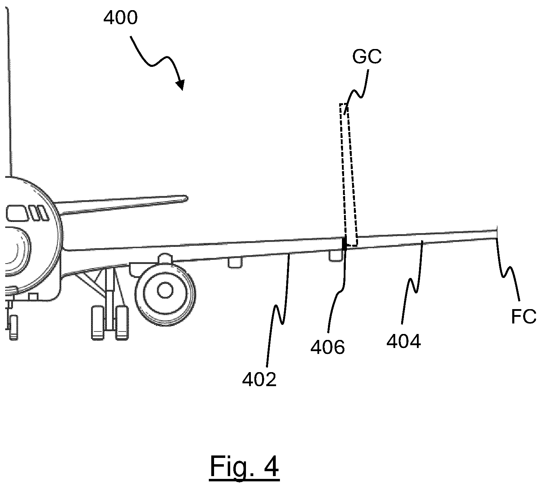

Figure 4 shows a front view of an aircraft wing 400. The aircraft wing 400 comprises a fixed wing 402 and a wing tip 404 mounted at an end of the fixed wing 402. The wing tip 404 is rotatable relative to the fixed wing 402 about a hinge axis 406. The wing 400 is operable between (i) a flight configuration (FC) for use during flight in which the wing tip 404 forms an extension of the fixed wing 402 and (ii) a ground configuration (GC) in which the wing tip 404 is rotated such that the span of the wing 400 is reduced. A latch (not shown) is located adjacent to the hinge axis 406, the latch configured to lock and unlock the wing 400 in the flight configuration (FC) and/or the ground configuration (GC).

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A latch for locking an aircraft folding wing, the latch comprising:
a lug comprising an aperture;
a latch pin moveable within the aperture; and
a seal configured to inhibit fluid transfer between the aperture and the latch pin as the latch pin moves within the aperture.

2. The latch according to claim 1, wherein the seal comprises a resilient portion.

3. The latch according to claim 1 or 2, wherein the seal comprises a contact portion configured to wipe the latch as the latch pin moves within the aperture.

4. The latch according to any preceding claim, wherein the seal comprises a retaining portion for retaining the seal in place.

5. The latch according to claim 4, when incorporating claims 2 and 3, wherein the resilient portion is between the contact portion and the retaining portion.

6. The latch according to any preceding claim, wherein the aperture is within a bush.

7. The latch according to any preceding claim, wherein the seal comprises a latch pin seal, the latch pin seal attached to the latch pin and configured to contact the aperture as the latch pin moves within the aperture.

8. The latch according to claim 7, wherein the latch pin seal is adjacent to an outer circumference of the latch pin.

9. The latch according to either of claims 7 and 8, wherein an outer edge of the latch pin seal is curved.

10. The latch according to any preceding claim, wherein the seal comprises an aperture seal, the aperture seal attached to the aperture and configured to contact the latch pin as the latch pin moves within the aperture.

11. The latch according to claim 10, wherein the aperture seal is adjacent to an inner circumference of the aperture.

12. The latch according to either of claims 10 and 11, wherein an outer edge of the aperture seal is tapered.

13. The latch according to any preceding claim, wherein a height of the seal is between 0.1 mm and 2 mm.

14. The latch according to any preceding claim, further comprising an actuator for moving the latch pin, the actuator being electrically powered or hydraulically powered.

15. An aircraft wing comprising a fixed wing and a wing tip mounted at an end of the fixed wing, the wing tip rotatable relative to the fixed wing about a hinge axis, wherein the aircraft wing further comprises:
a latch according to any of claims 1 to 14, the aperture located within the fixed wing or the wing tip, adjacent to the hinge axis.
